# EUROPÄISCHE PATENTSCHRIFT

(11) **EP 2 878 834 B1**
(45) Veröffentlichungstag und Bekanntmachung des Hinweises auf die Patenterteilung: **29.08.2018**
(21) Anmeldenummer: 14193481.0
(22) Anmeldetag: 17.11.2014
(51) Int. Cl.: F16B 13/14, F16B 37/12, F16B 23/00

(54) **Befestigungs-Anker zum Anbringen in einem porösen Werkstoff, Anordnung mit einem Verankerungs-Element eines derartigen Befestigungs-Ankers und Verfahren zum Anbringen eines derartigen Befestigungs-Ankers in einem Bohrloch eines porösen Werkstoffs**
Fixing anchor for placement in a porous material, assembly comprising an anchoring element of such a fixing anchor and method for fixing such a fixing anchor in a drilled hole of a porous material
Cheville de fixation destinée à être appliquée dans une matière poreuse, système doté d'un élément d'ancrage d'une telle cheville de fixation et procédé d'application d'une telle cheville de fixation dans un trou de perçage d'une matière poreuse

(30) Priorität: 29.11.2013 DE 102013224485; 18.08.2014 DE 102014216342
(43) Veröffentlichungstag der Anmeldung: 03.06.2015
(73) Patentinhaber: TOGE Dübel GmbH & Co. KG, 90431 Nürnberg (DE)
(72) Erfinder: Gerhard, Andreas, 90427 Nürnberg (DE)
(74) Vertreter: Rau, Schneck & Hübner Patentanwälte Rechtsanwälte PartGmbB

(56) Entgegenhaltungen:
- EP-A2- 1 085 220
- EP-A2- 1 760 329
- DE-A1-102006 003 172
- DE-A1-102011 052 022
- DE-U1- 9 414 703
- DE-U1- 20 214 186
- DE-U1-202006 021 070
- DE-U1-202009 011 050
- FR-A1- 2 381 936
- FR-A1- 2 974 599
- FR-A5- 2 033 559
- JP-U- S6 065 414
- US-A1- 2005 058 521
- US-B1- 6 361 258

## Beschreibung

Die Erfindung betrifft einen Befestigungs-Anker zum Anbringen in einem porösen Werkstoff, eine Anordnung mit einem Verankerungs-Element eines derartigen Befestigungs-Ankers sowie ein Verfahren zum Anbringen eines derartigen Befestigungs-Ankers in einem Bohrloch eines porösen Werkstoffs.

Befestigungs-Anker sind beispielsweise bekannt aus EP 1 760 329 A2, FR 2 381 936 A1, FR 2 033 559 A5, DE 202 14 186 U1, DE 10 2011 052 022 A1, DE 20 2006 021 070 U1, FR 2 974 599 A1, DE 20 2009 011 050 U1, US 2005/058 521 A1, EP 1 085 220 A2, DE 10 2006 003 172 A1, DE 94 14 703 U1, JP S60-65414 U und US 6,361,258 B1.

Für die Sanierung und/oder Instandhaltung bestehender Bauwerke, wie beispielsweise Brücken oder Gebäude, ist es erforderlich, die Bauwerke einzurüsten. Das bedeutet, dass ein Gerüst an dem Bauwerk befestigt wird. Es ist auch möglich, dass eine Schalung an dem Bauwerk befestigt wird. Zur Befestigung eines Gerüsts und/oder einer Schalung an dem Bauwerk werden Verbundklebe-Anker verwendet. Ein Verbundklebe-Anker wird in ein dafür vorgesehenes Bohrloch in dem Bauwerk geklebt. Durch das Verkleben ist der Verbundklebe-Anker dauerhaft mit dem Bauwerk verbunden. Nach dem Abnehmen des Gerüsts und/oder der Schalung bleibt der Verbundklebe-Anker an dem Bauwerk befestigt. Insbesondere ragt der Verbundklebe-Anker an einer Oberfläche des Bauwerks hervor. Der überstehende Abschnitt des Verbundklebe-Ankers wird abgetrennt. Die durch das Abtrennen entstehenden Schnittflächen neigen insbesondere in Folge von Witterungseinflüssen zur Korrosion. Ein korrodierender Verbundklebe-Anker kann Keimzelle einer Schädigung des Bauwerks sein. Zumindest ist die Erscheinung des Bauwerks unmittelbar nach Abschluss einer Sanierung beeinträchtigt. Derartige Beeinträchtigungen werden als Rostnasen bezeichnet und sind unerwünscht. Derartige Rostnasen können durch die Verwendung von Edelstahl-Verbundklebe-Ankern vermieden werden. Verbundklebe-Anker aus Edelstahl sind teuer. Alternativ ist es möglich, eine Schnittfläche nicht an der Oberfläche des Bauwerks, sondern im Inneren des Bohrlochs an dem Verbundklebe-Anker festzulegen, um eine sogenannte Werkstoffüberdeckung, insbesondere Betonüberdeckung, zu ermöglichen. Ein dafür erforderliches Trennverfahren ist kompliziert, zeitaufwendig und kostenintensiv.

Es ist die Aufgabe der vorliegenden Erfindung, einen Befestigungs-Anker derart zu schaffen, dass er in einem porösen Werkstoff zur Befestigung von Gegenständen zuverlässig angeordnet und vereinfacht entfernbar ist.

Diese Aufgabe wird erfindungsgemäß gelöst durch einen Befestigungs-Anker mit den im Anspruch 1 angegebenen Merkmalen.

Erfindungsgemäß wurde erkannt, dass ein Befestigungsanker zum Anbringen in einem porösen Werkstoff, insbesondere in Beton, zweiteilig ausgeführt ist. Der Befestigungs-Anker umfasst ein Verankerungs-Element zum Verankern in dem porösen Werkstoff. Das Verankerungs-Element weist eine Verankerungs-Element-Längsachse auf. Mittels des Verankerungs-Elements ist der Befestigungs-Anker zuverlässig und dauerhaft in dem porösen Werkstoff verankert. Der Befestigungs-Anker ist in dem porösen Werkstoff beispielsweise eines Bauwerks zuverlässig gehalten. Ferner umfasst der Befestigungs-Anker ein Montage-Element zum Montieren des Verankerungs-Elements in dem porösen Werkstoff. Das Montage-Element und das Verankerungs-Element sind bezüglich der Verankerungs-Element-Längsachse in drehmomentübertragender Weise miteinander verbunden. Insbesondere ist es möglich, eine auf das Montage-Element ausgeübte Drehbewegung, beispielsweise mittels eines Werkzeugs, auf das Verankerungs-Element, insbesondere zum Einschrauben desselben in den porösen Werkstoff, zu übertragen. Ferner sind das Montage-Element und das Verankerungs-Element lösbar miteinander verbunden. Dadurch ist es möglich, dass das Montage-Element von dem Verankerungs-Element gelöst wird. Das Lösen des Montage-Elements von dem Verankerungs-Element ist insbesondere dann interessant, wenn ein an dem Befestigungs-Anker zu befestigender Gegenstand, wie beispielsweise ein Gerüst oder eine Schalung, nicht mehr erforderlich ist. Das bedeutet insbesondere, dass ausschließlich das Verankerungs-Element des Befestigungs-Ankers in einem Bohrloch des porösen Werkstoffs dauerhaft verbleibt. Das Montage-Element kann beispielsweise zur Montage eines weiteren Verankerungs-Elements verwendet werden. Das Montage-Element kann gezielt und unkompliziert von dem Verankerungs-Element gelöst werden. Es ist nicht erforderlich, ein trennendes Verfahren einzusetzen. Schnittflächen, die Korrosionskeime begründen können, werden vermieden.

Bei dem Befestigungs-Anker weist das Montage-Element einen Entformungs-Abschnitt auf zum Entformen des Montage-Elements aus dem porösen Werkstoff. Der Entformungs-Abschnitt ist entlang der Verankerungs-Element-Längsachse konisch ausgeführt, wobei eine kleinere Querschnittsfläche des Entformungs-Abschnitts dem Verankerungs-Element zugewandt und eine größere Querschnittsfläche des Entformungs-Abschnitts dem Verankerungs-Element abgewandt ist. Durch diese Ausgestaltung kann insbesondere eine aushärtende Verbundmasse, die beim Eindrehen des Befestigungs-Ankers in ein Bohrloch durch das Verankerungs-Element verdrängt wird, zumindest teilweise an einer einer Bohrlochöffnung zugewandten rückwärtigen Stirnseite des Verankerungs-Elements aushärten. Dadurch wird ein Hinterschnitt gebildet, der eine zusätzliche Sicherung des Verankerungs-Elements in dem Bohrloch bewirkt. Dadurch, dass die größere Querschnittsfläche insbesondere im Bereich der Bohrlochöffnung angeordnet ist, können höhere statische Lasten an dem Montage-Element zugelassen werden. Diese Belastungen sind insbesondere im Vergleich zu einer Gewindestange mit einem Durchmesser, der zu dem Außengewinde des Montage-Elements entspricht, vergrößert.

Vorteilhaft ist ein Befestigungs-Anker, bei dem das Verankerungs-Element ein, insbesondere selbstschneidendes, Außengewinde aufweist. Das selbstschneidende Außengewinde dient zum Eindrehen des Verankerungs-Elements in den porösen Werkstoff. Die Montage und das Verankern des Verankerungs-Elements sind dadurch vereinfacht. Insbesondere ist es nicht erforderlich, ein in dem porösen Werkstoff vorgesehenes Bohrloch beispielsweise durch Einarbeiten eines Einschraubgewindes zur Befestigung des Verankerungs-Elements vorzubereiten.

Vorteilhaft ist ein Befestigungs-Anker mit einer Schraubverbindung oder einer Steckverbindung zum lösbaren Verbinden des Verankerungs-Elements mit dem Montage-Element. Eine Schraubverbindung ermöglicht eine unkomplizierte und standardisierte Verbindung des Verankerungs-Elements mit dem Montage-Element. Insbesondere weist das Verankerungs-Element ein Innengewinde und das Montage-Element ein dazu korrespondierendes Außengewinde auf. In diesem Fall kann das Montage-Element in das Verankerungs-Element eingeschraubt werden. Es ist aber auch möglich, dass das Montage-Element mit einem Innengewinde und das Verankerungs-Element mit einem dazu korrespondierenden Außengewinde ausgeführt sind. Insbesondere dann, wenn eine Axial-Zugbelastung entlang der Verankerungs-Element-Längsachse beim Montieren des Befestigungs-Ankers nicht zu erwarten ist, kann eine Steckverbindung zwischen dem Verankerungs-Element und dem Montage-Element vorgesehen sein. Die Steckverbindung zeichnet sich dadurch aus, dass das Montage-Element und das Verankerungs-Element jeweils einen Steckabschnitt aufweisen, um ineinander gesteckt zu werden. Dabei kann ein männlicher Steckabschnitt, der in einen weiblichen Steckabschnitt gesteckt wird, entweder an dem Verankerungs-Element oder an dem Montage-Element ausgeführt sein. Die Steckabschnitte weisen jeweils eine zueinander korrespondierende Innen- bzw. Außenkontur auf. Die Innen- bzw. Außenkontur ist in einer Ebene senkrecht zur Verankerungs-Element-Längsachse unrund, insbesondere als Vierkant- oder Sechskant-Kontur, ausgeführt.

Besonders vorteilhaft ist ein Befestigungs-Anker mit einer Schraubverbindung zum Verbinden des Verankerungs-Elements mit dem Montage-Element. Die Schraubverbindung zum lösbaren Verbinden des Verankerungs-Elements mit dem Montage-Element weist eine erste Gewindesteigung auf, die kleiner ist als eine zweite Gewindesteigung eines selbstschneidenden Außengewindes des Verankerungs-Elements zum Eindrehen desselben in den porösen Werkstoff. Insbesondere beträgt die zweite Gewindesteigung mehr als das Dreifache der ersten Gewindesteigung, insbesondere mehr als das Sechsfache und insbesondere mehr als das Neunfache. Dadurch ist das Lösen des Montage-Elements von dem verankerten Verankerungs-Element vereinfacht. Die Haftkraft, insbesondere in Folge der Selbsthemmung, des Montage-Elements in dem Verankerungs-Element ist kleiner als die des Verankerungs-Elements in dem Bohrloch. Das bedeutet, dass bei einer Betätigung des Montage-Elements in einer Ausschraub-Drehrichtung sich zunächst die Schraubverbindung zwischen Montage-Element und Verankerungs-Element lösen wird, bevor eine Krafteinleitung von dem Montage-Element auf das Verankerungs-Element auftritt. Ein unbeabsichtigtes Ausdrehen des Verankerungs-Elements aus dem Bohrloch ist dadurch vermieden. Insbesondere ist gewährleistet, dass ein unbeabsichtigtes Beschädigen des porösen Werkstoffs und/oder des Verankerungs-Elements vermieden werden kann.

Vorteilhaft ist ein Befestigungs-Anker mit einer Axialbegrenzung oder einer Verdrehsicherung zum Verbinden des Verankerungs-Elements und des Montage-Elements in drehmomentübertragender Weise. Insbesondere dann, wenn das Verankerungs-Element und das Montage-Element mittels einer Schraubverbindung miteinander verbunden sind, ist die Axialbegrenzung erforderlich. Eine Schraubverbindung als solche ist nicht geeignet, um eine Drehmomentübertragung zu gewährleisten. Durch das Vorsehen der Axialbegrenzung, die insbesondere als Anlageringschulter der Schraubverbindung ausgeführt ist, kann ein Eindrehdrehmoment von dem Montage-Element auf das Verankerungs-Element übertragen werden. Wenn eine erforderliche Einschraubtiefe des Montage-Elements an dem Verankerungs-Element erreicht ist, liegt das Montage-Element mit einer Anlageringschulter stirnflächig an einer dazu korrespondierenden Ringfläche des Verankerungs-Elements an.

Besonders vorteilhaft ist ein Befestigungs-Anker, bei dem der Entformungs-Abschnitt eine glatte Oberfläche aufweist. Dadurch ist das Entformen, also das Lösen des Montage-Elements von dem verankerten, insbesondere eingeschraubten und verklebten, Verankerungs-Element zusätzlich vereinfacht. Die Oberfläche des Entformungs-Abschnitts ist insbesondere derart beschaffen, dass eine aushärtbare Verbundmasse sich nicht übermäßig in Tälern der rauen Oberfläche verankern kann, da sonst das Lösen des Montage-Elements erschwert wäre. Eine derartige Oberfläche kann beispielsweise dadurch erreicht werden, dass die Oberfläche des Entformungs-Abschnitts geschliffen wird, wobei dafür verwendetes Schleifmittel wie beispielsweise Aluminiumoxyd, Siliziumcarbid oder Chrom (III)-Oxyd eine Korngröße von maximal 240 µm aufweisen. Dies entspricht einer Körnung eines Schleifpapiers von mindestens 80 gemäß der Körnungsangabe gemäß CAMI. Insbesondere beträgt die Körnung eines Schleifpapiers zur Erzeugung der glatten Oberfläche mindestens 100, insbesondere mindestens 180, insbesondere mindestens 300, insbesondere mindestens 600 und insbesondere mindestens 1000. Als glatte Oberfläche im Sinne dieser Anmeldung wird auch eine Oberfläche verstanden, die eine gemittelte Rautiefe R_{z} nach DIN 4768 im Bereich von 1 µm bis 25 µm, insbesondere im Bereich von 1,6 µm bis 16 µm und insbesondere im Bereich von 2,5 µm bis 6,3 µm aufweist.

Insbesondere kann die glatte Oberfläche auch dadurch erzeugt werden, dass an dem Montage-Element im Bereich des Entformungs-Abschnitts eine Gleitschicht vorgesehen ist. Die Gleitschicht kann beispielsweise durch ein Sprühverfahren aufgetragen werden. Es ist auch ein anderes Beschichtungsverfahren zum Auftragen der Gleitschicht möglich. Insbesondere ist es möglich, bei mehrfacher Verwendung des Montage-Elements vor der jeweiligen Verwendung die Qualität der Gleitschicht zu überprüfen, um diese bei Bedarf zu erneuern. Dadurch kann ein unbeabsichtigt erschwertes Entformen des Montage-Elements vermieden werden.

Vorteilhaft ist ein Befestigungs-Anker, bei dem das Montage-Element einen Befestigungs-Abschnitt aufweist. Der Befestigungs-Abschnitt dient zum Befestigen eines Gegenstands an dem Befestigungs-Anker. Der Befestigungs-Abschnitt kann als Gewindeabschnitt, insbesondere in Form eines Innengewindes oder eines Außengewindes ausgeführt sein. An dem Gewindeabschnitt kann ein weiterer Gegenstand, wie beispielsweise ein Gerüst oder eine Schalung, angeschraubt werden. Dadurch ist der Gegenstand an dem Befestigungs-Anker sicher und lösbar befestigt. Zusätzlich oder alternativ zu dem Befestigungs-Abschnitt kann das Montage-Element einen Drehmomentaufbringungs-Abschnitt aufweisen. Der Drehmomentaufbringungs-Abschnitt dient zum Aufbringen eines Drehmoments auf den Befestigungs-Anker. Das Aufbringen eines Drehmoments ist insbesondere zum Montieren des Montage-Elements an dem Verankerungs-Element und zum Verankern des Verankerungs-Elements in dem porösen Werkstoff vorteilhaft. Der Drehmomentaufbringungs-Abschnitt kann beispielsweise als Werkzeug-Abschnitt, insbesondere in Form eines Innensechskant- oder Außensechskant-Abschnitts ausgeführt sein.

Es ist eine weitere Aufgabe der vorliegenden Erfindung, eine Anordnung zu schaffen, bei der ein Befestigungs-Anker in einem Bohrloch eines porösen Werkstoffs zuverlässig verankerbar ist, wobei der Befestigungs-Anker an dem Bohrloch nicht vorsteht.

Diese Aufgabe ist erfindungsgemäß gelöst durch eine Anordnung mit den im Anspruch 8 angegebenen Merkmalen.

Erfindungsgemäß wurde erkannt, dass eine Anordnung mit einem in einem porösen Werkstoff angeordneten Bohrloch und einem in dem Bohrloch verankerten Verankerungs-Element derart auszuführen ist, dass das Verankerungs-Element versenkt in dem Bohrloch angeordnet sein muss. Dazu ist das Verankerungs-Element mit einer von 0 verschiedenen Senktiefe in dem Bohrloch angeordnet. Als Senktiefe wird ein senkrechter Abstand entlang einer Bohrloch-Längsachse von einer Stirnseite des Verankerungs-Elements zur Bohrlochöffnung verstanden. Dadurch ist bei der erfindungsgemäßen Anordnung eine Werkstoffüberdeckung, insbesondere eine Betonüberdeckung, gewährleistet. Die Gewährleistung der Werkstoffüberdeckung ist unkompliziert möglich. Insbesondere ist es nicht erforderlich, dass ein aufwendiges Trennverfahren eingesetzt werden muss.

Vorteilhaft ist eine Anordnung, bei der ein Entformungs-Abschnitt eines mit dem Verankerungs-Element verbindbaren Montage-Elements eine Länge aufweist, die im Wesentlichen der Senktiefe entspricht. Insbesondere sind die Länge des Entformungs-Abschnitts und die Senktiefe gleich groß.

Erfindungsgemäß ist eine Anordnung, bei der ein Entformungs-Abschnitt eines mit dem Verankerungs-Element verbindbaren Montage-Elements konisch ausgeführt ist. Der Entformungs-Abschnitt weist einen ersten Durchmesser und einen zweiten Durchmesser auf, wobei der zweite Durchmesser größer ist als der erste Durchmesser. Nach einer nicht erfindungsgemäßen Ausführung ist das Montage-Element mit dem zweiten Durchmesser einer Bohrlochöffnung zugewandt. Insbesondere ist der zweite Durchmesser im Wesentlichen so groß wie ein Bohrlochdurchmesser. Insbesondere beträgt der zweite Durchmesser mehr als 90% des Bohrlochdurchmessers, insbesondere mehr als 95 % des Bohrlochdurchmessers und insbesondere mehr als 99% des Bohrlochdurchmessers.

Besonders vorteilhaft ist eine Anordnung mit einem Drehmomentaufbringungs-Abschnitt an dem Montage-Element. Der Drehmomentaufbringungs-Abschnitt dient zum Aufbringen eines Drehmoments auf den Befestigungs-Anker. Es ist deshalb vorteilhaft, wenn der Drehmomentaufbringungs-Abschnitt aus der Bohrlochöffnung, also an der Oberfläche des porösen Werkstoffs, in dem verankerten Zustand des Verankerungs-Elements vorsteht. In diesem Fall ist die Betätigung des Befestigungs-Ankers, insbesondere das Aufbringen eines Drehmoments auf den Befestigungs-Anker vereinfacht. Die Zugänglichkeit des Befestigungs-Ankers mit einem Werkzeug ist vereinfacht. Insbesondere weist das Montage-Element einen Befestigungs-Abschnitt auf, der zum Befestigen eines Gegenstands an dem Befestigungs-Anker dient. Insbesondere steht der Befestigungs-Abschnitt aus einer Bohrlochöffnung, also an der Oberfläche des porösen Werkstoffs, aus dem Bohrloch vor. Dadurch ist eine Befestigung eines zu befestigenden Gegenstands an dem Befestigungs-Anker vereinfacht. Die Zugänglichkeit des Befestigungs-Abschnitts ist verbessert.

Es ist eine weitere Aufgabe der vorliegenden Erfindung, ein Verfahren zum Anbringen eines Befestigungs-Ankers in einem Bohrloch eines porösen Werkstoffs zu vereinfachen.

Diese Aufgabe ist erfindungsgemäß gelöst durch ein Verfahren mit den im Anspruch 12 angegebenen Merkmalen. Erfindungsgemäß wurde erkannt, dass ein derartiges Verfahren die Verfahrensschritte Einbringen einer insbesondere aushärtbaren Verbundmasse in ein Bohrloch, Einführen eines Befestigungs-Ankers in das Bohrloch, Anordnen des Verankerungs-Elements mit einer von 0 verschiedenen Senktiefe in dem Bohrloch, Verbinden und insbesondere Einschneiden des Verankerungs-Elements mit dem das Bohrloch umgebenden Werkstoff, Lösen des Montage-Elements von dem Verankerungs-Element und Entfernen des Montage-Elements aus dem Bohrloch umfasst. Dadurch verbleibt ausschließlich das Verankerungs-Element in der Senktiefe in dem Bohrloch. Das Verankerungs-Element ist nach dem Entfernen des Montage-Elements von außerhalb des Bohrlochs nicht sichtbar. Ein, insbesondere zerstörendes Trennen des Befestigungs-Ankers ist nicht erforderlich. Schnittflächen, die Korrosion initiieren, sind ausgeschlossen.

Vorteilhaft ist ein Verfahren, bei dem ein Verdrängen der Verbundmasse zumindest teilweise entgegen einer Einführrichtung des Befestigungs-Ankers zur Bohrlochöffnung hin durch das Anordnen des Verankerungs-Elements in der Senktiefe erfolgt. Die Verbundmasse wird also durch das Verankerungs-Element nach Außen zur Bohrlochöffnung hin verdrängt. Dadurch ist die Verbundmasse zumindest teilweise an einer rückwärtigen Stirnfläche des Verankerungs-Elements angeordnet. Durch das Aushärten der Verbundmasse wird ein zusätzlicher Halt des Verankerungs-Elements in dem Bohrloch erzeugt.

Vorteilhaft ist ein Verfahren, bei dem das Lösen des Montage-Elements von dem Verankerungs-Element durch das Lösen einer Schraubverbindung erfolgt. Das Lösen einer Schraubverbindung ist unkompliziert und insbesondere ohne übermäßigen Kraftaufwand möglich. Das Lösen des Montage-Elements kann insbesondere manuell erfolgen. Es ist ausgeschlossen, dass ein unbeabsichtigtes Lösen des Verankerungs-Elements bewirkt wird.

Weitere Vorteile und Einzelheiten der Erfindung werden nachfolgend anhand von zwei Ausführungsbeispielen gemäß der Zeichnung näher erläutert. In dieser zeigen:
- Fig. 1: eine teilgeschnittene Darstellung einer Anordnung eines Befestigungs-Ankers mit einem in einem Bohrloch verankerten Verankerungs-Element und einem in das VerankerungsElement eingeschraubte Montage-Element gemäß einem ersten Ausführungsbeispiel,
- Fig. 2: eine Fig. 1 entsprechende Darstellung mit dem Montage-Element in einer teilweise ausgeschraubten Anordnung,
- Fig. 3: eine Detailansicht gemäß Detail III in Fig. 2,
- Fig. 4: eine Fig. 1 entsprechende Darstellung mit dem aus dem Bohrloch entfernten Montage-Element, und
- Fig. 5: eine Fig. 4 entsprechende Darstellung eines Montage-Elements gemäß einem zweiten Ausführungsbeispiel.

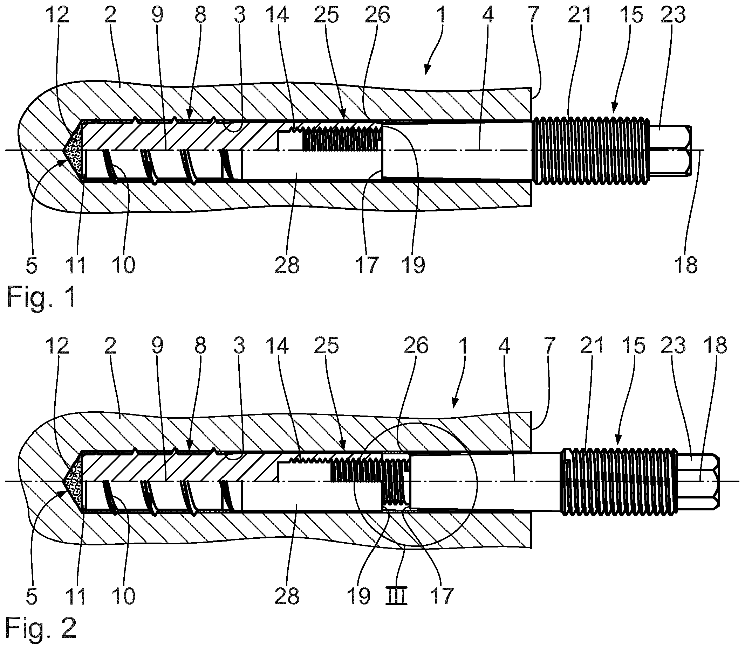

Nachfolgend wird anhand der Fig. 1 bis 4 ein Ausführungsbeispiel der Erfindung näher erläutert. Eine als Ganzes mit 1 bezeichnete Anordnung umfasst Beton als porösen Werkstoff 2 und ein in dem porösen Werkstoff 2 eingebrachtes Bohrloch 3. Anstelle von Beton sind auch andere poröse Werkstoffe denkbar, wie beispielsweise Asphalt, Mauerwerk, Sandstein.

Das Bohrloch 3 weist eine Bohrloch-Längsachse 4 auf. Das Bohrloch 3 ist als Sackloch ausgeführt und weist einen kegelförmigen Bohrlochgrund 5 und eine dem Bohrlochgrund 5 gegenüberliegende Bohrlochöffnung 6 auf. Die Bohrlochöffnung 6 ist in einer Ebene mit einer Oberfläche 7 des porösen Werkstoffs 2 angeordnet. Der poröse Werkstoff 2 kann beispielsweise zur Herstellung eines Bauwerks wie beispielsweise einer Brücke oder eines Gebäudes dienen. Die Oberfläche 7 ist insbesondere eine Sichtfläche des Bauwerks, an dem ein Gegenstand, wie beispielsweise ein Gerüst und/oder eine Schalung, befestigt werden soll.

Die Anordnung 1 umfasst weiterhin ein Verankerungs-Element 8, das in dem Bohrloch 3 verankert ist. Das Verankerungs-Element 8 weist eine Verankerungs-Element-Längsachse 9 auf, die gemäß dem gezeigten Ausführungsbeispiel mit der Bohrloch-Längsachse 4 zusammenfällt. Das Bohrloch 3 und das Verankerungs-Element 8 sind jeweils im Wesentlichen zylindrisch ausgeführt und koaxial zueinander angeordnet. Das Verankerungs-Element 8 weist ein selbstschneidendes Außengewinde 10 auf. Mit dem selbstschneidenden Außengewinde 10 ist das Verankerungs-Element 8 in das Bohrloch 3 eingeschraubt. Dazu weist das selbstschneidende Außengewinde 10 einen Außendurchmesser auf, der größer ist als ein Innendurchmesser d₃ des Bohrlochs 3. Durch ein Eindrehen des Verankerungs-Elements 8 schneidet das selbstschneidende Außengewinde 10 die dafür erforderlichen Gewindegänge in eine Zylindermantelfläche des Bohrlochs 3.

Entlang der Verankerungs-Element-Längsachse 9 erstreckt sich das selbstschneidende Außengewinde 10 etwa entlang der Hälfte der Gesamtlänge l_{ges} des Verankerungs-Elements 8. Insbesondere beträgt die Länge l_{ag} des Außengewindes 10 exakt die Hälfte der Gesamtlänge l_{ges} des Verankerungs-Elements 8.

Im Bohrlochgrund 5 ist eine selbstaushärtende Verbundmasse 12 vorgesehen. Die Verbundmasse 12 dient zum Verkleben des Verankerungs-Elements 8 in dem Bohrloch 3. Die Verbundmasse 12 ist insbesondere derart dosiert, dass das in dem Bohrloch 3 vorhandene Volumen größer ist als das Volumen des Bohrlochgrunds 5, sodass beim Eindrehen des Verankerungs-Elements 8 die Verbundmasse 12 zumindest teilweise entgegen einer Einführrichtung, also entlang der Bohrloch-Längsachse 4 von dem Bohrlochgrund 5 hin zur Bohrlochöffnung 6 verdrängt wird. Insbesondere ist die Verbundmasse 12 also auch in einem Ringspalt zwischen einem Schaft des Verankerungs-Elements 8 im Bereich des selbstschneidenden Außengewindes 10 und der Bohrlochinnenwand angeordnet. Das Verankerungs-Element 8 weist ein weiteres, rückwärtiges Ende 13 auf, das dem freien Ende 11 gegenüberliegend angeordnet ist. Das rückwärtige Ende 13 ist der Bohrlochöffnung 6 zugewandt. Das rückwärtige Ende 13 des Verankerungs-Elements 8 ist entlang der Bohrloch-Längsachse 4 in einem Abstand t von der Bohrlochöffnung 6 angeordnet. Der Abstand t wird auch als Senktiefe bezeichnet. Das bedeutet, dass das Verankerungs-Element 8 mit der Senktiefe t in dem Bohrloch 3 versenkt angeordnet ist. Die Senktiefe t ist verschieden von 0 und beträgt insbesondere mindestens 4 cm und insbesondere mindestens 5 cm.
Ausgehend von dem rückwärtigen Ende 13 erstreckt sich entlang der Verankerungs-Element-Längsachse 9 ein Innengewinde 14. Das Innengewinde 14 ist ein metrisches Innengewinde mit einer ersten Gewindesteigung g₁ von ungefähr 1,5. Das selbstschneidende Außengewinde 10 weist eine zweite Gewindesteigung g₂ auf, die gemäß dem gezeigten Ausführungsbeispiel 14 beträgt. Wesentlich ist, dass die zweite Gewindesteigung g₂ größer ist als die erste Gewindesteigung g₁, wobei insbesondere gilt: g₂/g₁ > 3, insbesondere g₂/g₁ > 6 und insbesondere g₂/g₁ > 9.

Das Innengewinde 14 erstreckt sich von dem rückwärtigen Ende 13 entlang einer Lände l_{ig}, die etwa ein Drittel der Gesamtlänge l_{ges} des Verankerungs-Elements 8 beträgt. Zwischen dem Innengewinde 14 und dem selbstschneidenden Außengewinde 10 ist an dem Verankerungs-Element 8 ein gewindefreier Zwischenabschnitt 28 vorgesehen. Der Zwischenabschnitt 28 weist eine Länge l_{z} entlang der Verankerungs-Element-Längsachse 9 auf. Die Länge l_{z} beträgt etwa 15 bis 20 % der Gesamtlänge l_{ges} des Verankerungs-Elements 8. Es ist aber auch möglich, dass die Länge l_{z} kleiner ist als 0,15 · l_{ges}. Insbesondere ist es denkbar, dass l_{z} = 0 gilt, also dass kein Zwischenabschnitt 28 vorgesehen ist. Insbesondere gilt: l_{ges} = l_{ag} + l_{ig} + l_{z}.

Das Verankerungs-Element 8 ist mit einem Montage-Element 15 lösbar verbindbar. Zum lösbaren Verbinden des Verankerungs-Elements 8 mit dem Montage-Element 15 ist eine Schraubverbindung vorgesehen. Die Schraubverbindung umfasst das Innengewinde 14 des Verankerungs-Elements und ein zu dem Innengewinde 14 korrespondierendes Außengewinde 16 des Montage-Elements. Mit dem Außengewinde 16 ist das Montage-Element 15 in das Innengewinde 14 des Verankerungs-Elements 8 einschraubbar.

Das Montage-Element 15 ist mit dem Verankerungs-Element 8 in drehmomentübertragender Weise verbunden. Dazu weist das Montage-Element 15 eine Anlageschulterfläche 17 auf. Die Anlageschulterfläche 17 ist ringförmig ausgeführt. Der Innendurchmesser der Ringfläche entspricht dem Außendurchmesser des Außengewindes 16. Ein Außendurchmesser der Ringfläche ist größer als der Innendurchmesser. Die Anlageschulterfläche 17 ist senkrecht zu einer Montage-Element-Längsachse 18 orientiert. Die Montage-Element-Längsachse 18 fällt im montierten Zustand mit der Verankerungs-Element-Längsachse 9 und somit mit der Bohrloch-Längsachse 4 zusammen. Die Anlageschulterfläche 17 des Montage-Elements 15 dient zum Anliegen an einer Stirnringfläche 19 des Verankerungs-Elements 8. Durch das Anliegen der Anlageschulterfläche 17 an der Stirnringfläche 19 ist eine maximale Einschraubtiefe des Montage-Elements an dem Verankerungs-Element 8 definiert. Gleichzeitig ist durch das Anliegen der beiden Flächen 17, 19 aneinander eine Kraftübertragung in Drehrichtung um die Verankerungs-Element-Längsachse 9 und um die Montage-Element-Längsachse 18 möglich, da ein Einschrauben des Montage-Elements 15 mit dem Außengewinde 16 in das Innengewinde 14 nicht möglich ist. Eine Relativverlagerung des Montage-Elements 15 zu dem Verankerungs-Element 8 hin ist verhindert. Die Anlageschulterfläche 17 und die Stirnringfläche 19 bilden eine Axialbegrenzung zum Verbinden des Verankerungs-Elements 8 mit dem Montage-Element 15 in drehmomentübertragender Weise.

Das Außengewinde 16 ist an einem freien Ende des Montage-Elements 15 angeordnet. Ausgehend von dem Außengewinde 16 schließt sich ein Entformungs-Abschnitt 20 an. Der Entformungs-Abschnitt 20 weist eine Konizität mit einem Öffnungswinkel n gegenüber der Montage-Element-Längsachse 18 auf. Der Winkel n beträgt weniger als 1°, insbesondere weniger als 0,5°, insbesondere weniger als 0,1° und insbesondere weniger als 0,05°. Der Entformungs-Abschnitt 20 ist ein konisch ausgeführter Schaft. Der Entformungs-Abschnitt 20 weist einen kleineren, ersten Durchmesser d₁ auf, der dem Außengewinde 16 zugewandt ist. Der Entformungs-Abschnitt 20 weist einen zweiten, größeren Durchmesser d₂ auf, der dem ersten Durchmesser d₁ gegenüberliegend an dem Entformungs-Abschnitt 20 angeordnet ist. Dadurch, dass der zweite Durchmesser d₂ größer ist als der erste Durchmesser d₁, weist das Montage-Element eine erhöhte statische Festigkeit auf. Dadurch ist es möglich, größere Lasten wie beispielsweise Gegenstände an dem Befestigungs-Anker 25 zu befestigen. An den zweiten Durchmesser d₂ des Entformungs-Abschnitts 20 schließt sich ein Befestigungs-Abschnitt 21 an. Der Befestigungs-Abschnitt 21 weist ein Befestigungs-Außengewinde 22 auf, das zum Befestigen eines Gegenstands dienen kann. An den Befestigungs-Abschnitt 21 schließt sich entlang der Montage-Element-Längsachse 18 ein Drehmomentaufbringungs-Abschnitt 23 an, der als Außensechskant-Zapfen ausgeführt ist. Der Drehmomentaufbringungs-Abschnitt 23 dient zum Aufbringen eines Drehmoments auf das Montage-Element 15. Der Drehmomentaufbringungs-Abschnitt 23 dient als Werkzeugabschnitt. Es ist auch denkbar, dass der Drehmomentaufbringungs-Abschnitt 23 als Innensechskant-Abschnitt ausgeführt und in den Befestigungs-Abschnitt 21 integriert ist. Dadurch kann die Baulänge des Montage-Elements 15 reduziert werden. Das Montage-Element 15 ist einstückig aus einem Teil hergestellt.

Das Außengewinde 16 ist gemäß dem gezeigten Ausführungsbeispiel als metrisches M16-Außengewinde ausgeführt. Das Außengewinde 16 weist eine Gewindelänge l_{g} auf, die etwa der Hälfte der Länge l des Entformungs-Abschnitts 20 entspricht. Insbesondere entspricht die Gewindelänge l_{g} exakt der Hälfte der Länge l des Entformungs-Abschnitts 20. Der Befestigungs-Abschnitt 21 weist ausschließlich das Befestigungs-Außengewinde 22 auf. Gemäß dem gezeigten Ausführungsbeispiel ist das Befestigungs-Außengewinde 22 als metrisches M24-Außengewinde ausgeführt. Die Länge l_{b} des Befestigungs-Abschnitts 21 entlang der Montage-Element-Längsachse 18 ist kleiner als die Länge l des Entformungs-Abschnitts 20. Gemäß dem gezeigten Ausführungsbeispiel gilt: l_{b} / l = 0,8.

Die Länge l_{d} des Drehmomentaufbringungs-Abschnitts 23 entlang der Montage-Element-Längsachse 18 beträgt etwa ein Drittel der Länge l des Entformungs-Abschnitts 20. Gemäß dem gezeigten Ausführungsbeispiel ist der Drehmomentaufbringungs-Abschnitt 23 ein Außensechskantkopf mit Schlüsselweite SW17.

Der Bohrlochdurchmesser d₃ ist im Wesentlichen so groß wie der zweite Durchmesser d₂ des Entformungs-Abschnitts 20 des Montage-Elements 15. Insbesondere gilt: d₂ > 0,9 · d₃, insbesondere d₂ > 0,95 · d₃ und insbesondere d₂ > 0,99 · d₃.

Der Entformungs-Abschnitt 20 weist entlang der Montage-Element-Längsachse 18 eine Länge l auf, die im Wesentlichen der Senktiefe t entspricht. Insbesondere gilt: l = t.

Der Entformungs-Abschnitt 20 weist eine glatte Oberfläche auf, um das Entformen des Montage-Elements zu vereinfachen. Die glatte Oberfläche ist insbesondere durch eine Gleitschicht 24 ausgeführt, die gemäß dem gezeigten Ausführungsbeispiel durch Aufsprühen einer Graphitschicht realisiert ist.

Das Verankerungs-Element 8 und das Montage-Element 15 bilden einen Befestigungs-Anker 25. Der Befestigungs-Anker 25 ist zweiteilig ausgeführt, wobei die Elemente 8, 15 lösbar und in drehmomentübertragender Weise miteinander verbindbar sind.

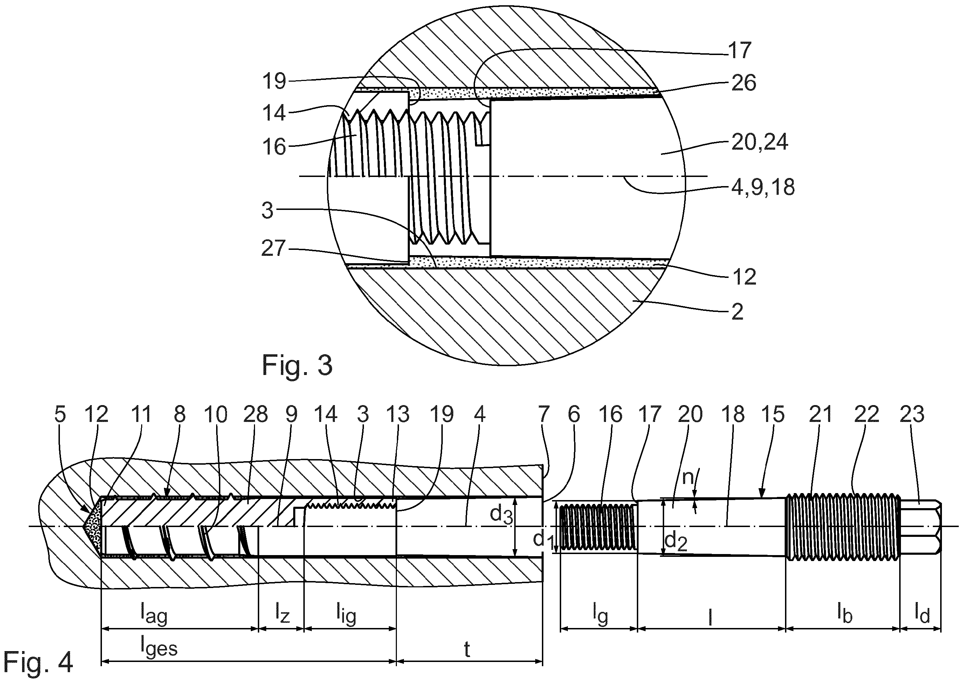

Im Folgenden wird anhand der Fig. 1 bis 4 ein Verfahren zum Anbringen des Befestigungs-Ankers 25 in dem Bohrloch 3 in dem porösen Werkstoff 2 näher erläutert. Zunächst wird in den porösen Werkstoff 2 ein Bohrloch 3 als Sackloch eingebracht. In das Bohrloch wird die Verbundmasse 12 eingebracht, sodass die Verbundmasse 12 insbesondere am Bohrlochgrund 5 angeordnet ist. In das Bohrloch 3 wird der Befestigungs-Anker 25 mit dem Verankerungs-Element 8, insbesondere mit dem freien Ende 11 voran eingeführt. Sofern das Verankerungs-Element 8 und das Montage-Element 15 des Befestigungs-Ankers 25 voneinander getrennt sind, werden diese, bevor der Befestigungs-Anker 25 in das Bohrloch 3 eingebracht wird, miteinander verbunden. Dazu wird das Montage-Element 15 mit dem Außengewinde 16 in das Innengewinde 14 des Verankerungs-Elements 8 eingeschraubt. Der Einschraubvorgang erfolgt solange bis das Montage-Element 15 mit der Anlageschulterfläche 17 an der Stirnringfläche 19 des Verankerungs-Elements 8 anliegt. In diesem Zustand sind das Verankerungs-Element 8 und das Montage-Element 15 in drehmomentübertragender Weise miteinander verbunden. In diesem Zustand wird ein auf das Montage-Element 15 aufgebrachtes Drehmoment auf das Verankerungs-Element 8 übertragen. Dadurch, dass der Außendurchmesser des selbstschneidenden Außengewindes 10 größer ist als der Bohrlochdurchmesser d₃, ist es nicht möglich, dass Verankerungs-Element 8, also den Befestigungs-Anker 25 entlang der Bohrloch-Längsachse 4 axial einzuschieben. Das Einführen und Anordnen des Befestigungs-Ankers 25 erfolgt dadurch, dass der Drehmomentaufbringungs-Abschnitt 23 mit einem dafür vorgesehenen Werkzeug, wie beispielsweise einem Gabel- oder einem Ringschlüssel, beaufschlagt wird. Sofern, wie beispielsweise in Fig. 2 dargestellt, das Montage-Element 15 nicht vollständig in das Verankerungs-Element 8 eingeschraubt sein sollte, wird zunächst die Schraubverbindung zwischen dem Verankerungs-Element 8 und dem Montage-Element 15 derart geschlossen, dass das Montage-Element 15 mit der Anlageschulterfläche 17 an der Stirnringfläche 19 des Verankerungs-Elements 8 anliegt. Dann ist ein weiteres Einschrauben des Außengewindes 16 in das Innengewinde 14 nicht mehr möglich. Ab diesem Zeitpunkt bewirkt ein Beaufschlagen des Montage-Elements 15 in einer Einschraubdrehrichtung eine Drehmomentübertragung von dem Montage-Element 15 auf das Verankerungs-Element 8. Somit bewirkt eine Drehmomentbeaufschlagung des Montage-Elements 15 eine Drehmomentbeaufschlagung des Befestigungs-Ankers 25. Dadurch wird der Befestigungs-Anker 25 über das selbstschneidende Außengewinde 10 des Verankerungs-Elements 8 in das Bohrloch 3 eingeschraubt. Sobald ein durch das freie Ende 11 des Verankerungs-Elements 8 und dem Bohrlochgrund 5 gebildetes Volumen kleiner ist als das Volumen der in das Bohrloch 3 eingebrachten Verbundmasse 12, wird diese entgegen der Einführrichtung von dem Bohrlochgrund 5 zur Bohrlochöffnung 6 hin verdrängt. Die in das Bohrloch 3 vor dem Einbringen des Befestigungs-Ankers 25 eingebrachte Menge der Verbundmasse 12 ist derart bemessen, dass das verdrängte Volumen bis über das rückwärtige Ende 13 des Verankerungs-Elements 8 und insbesondere bis zum Montage-Element 15 hinweg gelangt. Insbesondere gelangt die Verbundmasse 12 in den Zwischenraum 26 zwischen dem zylindrischen Bohrloch 3 und dem konischen Entformungs-Abschnitt 20 des Montage-Elements 15. Dieser Zwischenraum 26, der zu dem konischen Entformungs-Abschnitt 20 korrespondiert, ist in Fig. 1 dargestellt. Dadurch, dass der zweite Durchmesser d₂ des Entformungs-Abschnitts 20 kleiner ist als der Bohrlochdurchmesser d₃ kann die Verbundmasse 12 an dem rückwärtigen Ende 13 des Verankerungs-Elements 8 radial nach innen fließen. Dadurch bildet die Verbundmasse 12 ein Hinterschnittelement 27 aus, das in Fig. 3 dargestellt ist. Das Hinterschnittelement 27 bewirkt eine zusätzliche Sicherung des Verankerungs-Elements 8 gegen unbeabsichtigtes Herausziehen entlang der Bohrloch-Längsachse 4 aus dem Bohrloch 3. Die Verbundmasse 12 härtet aus.

Fig. 1 zeigt diesen Zustand des Befestigungs-Ankers 25, also in einem vollständig eingeschraubten Zustand in dem Bohrloch 3 des porösen Werkstoffs 2. In dieser Anordnung kann an dem Befestigungs-Anker 25 ein beliebiger Gegenstand befestigt werden, indem beispielsweise der Gegenstand auf den Befestigungs-Abschnitt 21 aufgesteckt und mittels einer nicht dargestellten Befestigungsmutter, die auf das Befestigungs-Außengewinde 22 aufgeschraubt wird, klemmend gehalten wird. Sofern ein anderes Befestigungs-Element verwendet werden soll und/oder wenn das Montage-Element 15 beispielsweise zur Montage eines weiteren Verankerungs-Elements 8 verwendet werden soll, kann das Montage-Element 15 von dem in dem Bohrloch 3 verankerten Verankerungs-Element 8 gelöst werden, indem die Schraubverbindung 14, 16 zwischen dem Verankerungs-Element 8 und dem Montage-Element 15 gelöst wird. Dazu wird das Montage-Element 15 an dem Drehmomentaufbringungs-Abschnitt 23 mittels des dafür vorgesehenen Werkzeugs entgegen der Einschraubdrehrichtung in einer Ausschraubdrehrichtung beaufschlagt. Durch das Beaufschlagen des Montage-Elements 15 in der Ausschraub-Drehrichtung wird das Montage-Element 15 aus dem Verankerungs-Element 8 geschraubt. Selbst wenn ausgehärtete Verbundmasse 12 an einer äußeren Mantelfläche des Montage-Elements 15, insbesondere im Bereich des Entformungs-Abschnitts 20 anhaften sollte, so wird diese aufgrund der glatten Oberfläche reduzierte Haftkraft beim Ausdrehen überwunden. Dadurch, dass die erste Gewindesteigung g₁ kleiner ist als die zweite Gewindesteigung g₂, bewirkt allein die Selbsthemmung der Außengewinde, dass das Außengewinde 16 in dem Innengewinde 14 bei vergleichsweise geringer Drehmomentbelastung zuerst und erst anschließend das selbstschneidende Außengewinde 10 in dem Bohrloch 3 gelöst wird.

Aus der Anordnung in Fig. 1 geht hervor, dass in dem vollständig eingeschraubten Zustand des Befestigungs-Ankers 25 dieser derart in dem Bohrloch 3 angeordnet ist, dass sowohl der Befestigungs-Abschnitt 21 als auch der Drehmomentaufbringungs-Abschnitt 23 außerhalb des Bohrlochs 3 angeordnet sind. Der Befestigungs-Abschnitt 21 und der Drehmomentaufbringungs-Abschnitt 23 ragen an dem Bohrloch 3 aus der Bohrlochöffnung 6 hervor. Die Abschnitte 21, 23 sind also problemlos von außerhalb des Bohrlochs 3 zugänglich.

Nach dem Ausschreiben, also nach dem Lösen der Schraubverbindung, des Montage-Elements 15 kann dieses vollständig aus dem Bohrloch 3 entfernt werden. Das Verankerungs-Element verbleibt in der Senktiefe t in dem Bohrloch 3. In dieser Anordnung ist das Verankerungs-Element 8 von außerhalb des Bohrlochs 3 nicht sichtbar. Es ist möglich, das Verankerungs-Element 8 zu einem späteren Zeitpunkt zu nutzen, um ein Montage-Element 15 mit einem Befestigungs-Abschnitt 21 daran zu befestigen.

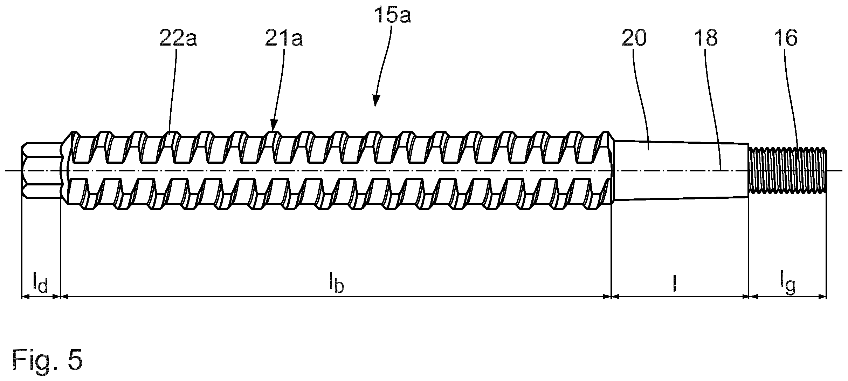

In Folgenden wird unter Bezugnahme auf die Fig. 5 ein zweites Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.
Der wesentliche Unterschied gegenüber dem ersten Ausführungsbeispiel besteht darin, dass das Befestigungs-Außengewinde 22a des Befestigungs-Abschnitts 21a als Außen-Grobgewinde ausgeführt ist. Die Länge l_{b} des Befestigungs-Abschnitts 21a entlang der Montage-Element-Längsachse 18 ist größer als die Länge l des Entformungs-Abschnitts 20. Erfindungsgemäß sind der Entformungs-Abschnitt 20 und vorzugsweise auch das Außengewinde 16 identisch ausgeführt zu dem Montage-Element 15 gemäß dem ersten Ausführungsbeispiel. Die Länge l_{b} des Befestigungs-Abschnitts 21a beträgt insbesondere mindestens das Zweifache der Länge des Entformungs-Abschnitts 20, insbesondere das Dreifache und insbesondere das Vierfache.
Das Außengrobgewinde ist einteilig an einem Stahlspannstab angeformt, insbesondere in Form von warmgewalzten Rippen ausgeführt. Das Außen-Grobgewinde kann als Rechtsgewinde oder als Linksgewinde ausgeführt sein. Der Befestigungs-Abschnitt 21a kann als Halbzeug beschafft und mit dem Entformungs-Abschnitt 20 und dem Außengewinde 16 zu dem Befestigungs-Element 15 gefügt, insbesondere verschweißt, werden. Der Befestigungs-Abschnitt 21a mit dem Befestigungs-Außengewinde 22a kann auch einteilig mit dem Entformungs-Abschnitt 20 an dem Außengewinde 16 ausgeführt sein.

Das Befestigungs-Außengewinde 22a weist einen Nenndurchmesser von 26,5 mm und eine Gewindesteigung von 13 mm auf. Der Nenndurchmesser und die Gewindesteigung können auch größer oder kleiner als in dem gezeigten Ausführungsbeispiel ausgeführt sein. Typische Nenndurchmesser sind beispielsweise 17,5 mm, 32 mm, 36 mm, 40 mm oder 47 mm.

Das Montage-Element 15a und insbesondere der Befestigungs-Abschnitt 21a sind aus einem Stahl mit einer Zugfestigkeit von mindestens 450 N/mm², insbesondere von mindestens 600 N/mm², insbesondere von mindestens 700 N/mm², insbesondere von mindestens 800 N/mm² und insbesondere von höchstens 900 N/mm².

Das Montage-Element 15a stellt eine Anschlussmöglichkeit, insbesondere für ein weiteres Bauelement, dar. Ein Befestigungs-Anker, der das Montage-Element 15a umfasst, kann in einem Bohrloch an einem Bauwerk angeordnet sein. Das aus dem Bohrloch vorstehende Befestigungs-Element 15a, insbesondere der Befestigungs-Abschnitt 21a, dient zum Verbinden mit einem weiteren Bauelement, insbesondere aus Beton. Das Befestigungs-Element 15a, insbesondere der Befestigungs-Abschnitt 21a, kann mit fließfähigem Beton umgossen werden. Das Befestigungs-Element 15a kann als Stahlarmierung im Beton dienen. Das Außen-Grobgewinde ermöglicht eine gute Verbindung mit dem Beton, insbesondere gegenüber einem metrischen Gewinde. Auf den Befestigungs-Abschnitt 21a kann eine korrespondierende Befestigungsmuffe aufgeschraubt werden, um ein weiteres Element daran zu befestigen. Dadurch ist es möglich, nachträglich einen Anschluss an Betonelemente zu schaffen, insbesondere ist es nicht erforderlich, beim ersten Betonieren Anschlusselemente vorzusehen. Mittels des erfindungsgemäßen Befestigungs-Ankers kann nachträglich und unkompliziert eine Anschlussarmierung geschaffen werden. Die Anschlussarmierung ist insbesondere über Muffenverbindungen im Wesentlichen beliebig verlängerbar. Die Ausführung des Befestigungs-Außengewinde 22a als Außen-Grobgewinde weist gegenüber einem metrischen Gewinde den zusätzlichen Vorteil auf, dass es robust ausgeführt ist. Eine grobe und insbesondere unsachgemäße Handhabung durch arbeitende Personen auf der Baustelle ist für das Außen-Grobgewinde unproblematisch. Das Außen-Grobgewinde hält einer derartigen Handhabung stand. Eine Verschmutzung, insbesondere durch Sand, ist grundsätzlich unproblematisch. Zudem ist eine derartige Verschmutzung unkompliziert zu reinigen.

## Patentansprüche

1. Befestigungs-Anker zum Anbringen in ein Bohrloch (3) in einem porösen Werkstoff, wobei der Befestigungs-Anker (25) aufweist
a. ein eine Verankerungs-Element-Längsachse (9) aufweisendes Verankerungs-Element (8) zum Verankern in dem porösen Werkstoff (2),
b. ein Montage-Element (15) zum Montieren des Verankerungs-Elements (8) in dem porösen Werkstoff (2),
c. wobei das Montage-Element (15) und das Verankerungs-Element (8) bezüglich der Verankerungs-Element-Längsachse (9) in Drehmomentübertragenderweise miteinander verbindbar sind,
d. wobei das Montage-Element (15) und das Verankerungs-Element (8) lösbar miteinander verbindbar sind,
wobei e.das Montage-Element (15) einen Entformungs-Abschnitt (20) zum Entformen des Montage-Elements (15) aus dem porösen Werkstoff (2) aufweist,
f. der Entformungs-Abschnitt (20) entlang der Verankerungs-Element-Längsachse (9) konisch ausgeführt ist, wobei eine kleinere Querschnittsfläche des Entformungs-Abschnitts (20) dem Verankerungs-Element (8) zugewandt und eine größere Querschnittsfläche des Entformungs-Abschnitts (20) dem Verankerungs-Element (8) abgewandt ist,
g. der Entformungs-Abschnitt (20) eine Konizität mit einem Öffnungswinkel (n) gegenüber der Verankerungs-Element-Längsachse (9) aufweist,
**dadurch gekennzeichnet, dass** gilt: n < 1°.

2. Befestigungs-Anker nach Anspruch 1, **dadurch gekennzeichnet, dass** das Verankerungs-Element (8) ein, insbesondere selbstschneidendes, Außengewinde (10) zum Eindrehen des Verankerungs-Elements (8) in dem porösen Werkstoff (2) aufweist.

3. Befestigungs-Anker nach einem der vorstehenden Ansprüche, **gekennzeichnet durch** eine Schraubverbindung (14, 16) oder eine Steckverbindung zum lösbaren Verbinden des Verankerungs-Elements (8) mit dem Montage-Element (15).

4. Befestigungs-Anker nach Anspruch 3, **dadurch gekennzeichnet, dass** die Schraubverbindung (14, 16) zum lösbaren Verbinden des Verankerungs-Elements (8) mit dem Montage-Element (15) eine erste Gewindesteigung (g₁) aufweist, die kleiner ist als eine zweite Gewindesteigung (g₂) eines selbstschneidenden Außengewindes (10) des Verankerungs-Elements (8) zum Eindrehen in den porösen Werkstoff (2), wobei insbesondere gilt g₂/g₁ > 3, insbesondere g₂/g₁ > 6 und insbesondere g₂/g₁ > 9.

5. Befestigungs-Anker nach einem der vorstehenden Ansprüche, **gekennzeichnet durch** eine Axialbegrenzung (17, 19) oder eine Verdrehsicherung zum Verbinden des Verankerungs-Elements (8) und des Montage-Element (15) in Drehmomentübertragenderweise.

6. Befestigungs-Anker nach einem der vorstehenden Ansprüche, **dadurch gekennzeichnet, dass** der Entformungs-Abschnitt (20) eine glatte Oberfläche, insbesondere eine Gleitschicht (24) aufweist.

7. Befestigungs-Anker nach einem der vorstehenden Ansprüche, **dadurch gekennzeichnet, dass** das Montage-Element (15) einen Befestigungs-Abschnitt (21) zum Befestigen eines Gegenstands an dem Befestigungs-Anker (25) und/oder einen Drehmomentaufbringungs-Abschnitt (23) zum Aufbringen eines Drehmoments auf den Befestigungs-Anker (25) aufweist.

8. Anordnung aufweisend
a. ein in einem porösen Werkstoff (2) angeordnetes Bohrloch (3),
b. ein in dem Bohrloch (3) verankertes Verankerungs-Element (8) eines Befestigungs-Ankers (25) nach einem der vorstehenden Ansprüche,
c. wobei das Verankerungs-Element (8) mit einer von Null verschiedenen Senktiefe (t) in dem Bohrloch (3) versenkt angeordnet ist.

9. Anordnung nach Anspruch 8, **dadurch gekennzeichnet, dass** der Entformungs-Abschnitt (20) des mit dem Verankerungs-Element (8) verbindbaren Montage-Elements (15) eine Länge (1) aufweist, die im Wesentlichen der Senktiefe (t) entspricht, wobei insbesondere gilt 1 = t.

10. Anordnung nach einem der Ansprüche 8 bis 9, **dadurch gekennzeichnet, dass** ein Drehmomentaufbringungs-Abschnitt (23) des Montage-Elements (15) zum Aufbringen eines Drehmoments auf den Befestigungs-Anker (25) an der Bohrlochöffnung (6) aus dem Bohrloch (3) vorsteht, wobei das Montage-Element (15) insbesondere einen Befestigungs-Abschnitt (21) zum Befestigen eines Gegenstands an dem Befestigungs-Anker (25) aufweist und wobei der Befestigungs-Abschnitt (21) an der Bohrlochöffnung (6) aus dem Bohrloch (3) vorsteht.

11. Verfahren zum Anbringen eines Befestigungs-Ankers (25) nach einem der Ansprüche 1 bis 7 in einem Bohrloch (3) eines porösen Werkstoffs (2) aufweisend die Verfahrensschritte
- Einbringen einer Verbundmasse (12) in ein Bohrloch (3),
- Einführen des Befestigungs-Ankers (25) in das Bohrloch (3),
- Anordnen des Verankerungs-Elements (8) mit einer von Null verschiedenen Senktiefe (t) in dem Bohrloch (3),
- Verbinden des Verankerungs-Elements (8) mit dem das Bohrloch (3) umgebenden porösen Werkstoff (2),
- Lösen des Montage-Elements (15) von dem Verankerungs-Element (8),
- Entfernen des Montage-Elements (15) aus dem Bohrloch (3).

12. Verfahren nach Anspruch 11, **gekennzeichnet durch** ein Verdrängen zumindest teilweise der Verbundmasse (12) entgegen einer Einführrichtung des Befestigungs-Ankers (25) zur Bohrlochöffnung (6) hin durch das Anordnen des Verankerungs-Elements (8) in der Senktiefe (t).

13. Verfahren nach Anspruch 11 oder 12, **dadurch gekennzeichnet, dass** das Lösen des Montage-Elements (15) durch ein Lösen einer Schraubverbindung erfolgt.

## Claims

1. Fixing anchor for placement in a drill hole (3) in a porous material, the fixing anchor (25) comprising
a. an anchoring element (8) having an anchoring element longitudinal axis (9) to be anchored in the porous material (2),
b. a mounting element (15) to mount the anchoring element (8) in the porous material (2),
c. the mounting element (15) and the anchoring element (8) being connectable to each other in relation to the anchoring element longitudinal axis (9) in such a way that a torque is transmittable,
d. the mounting element (15) and the anchoring element (8) being detachably connectable to each other,
e. the mounting element (15) including a demolding section (20) allowing the mounting element (15) to be demolded from the porous material (2),
f. the demolding section (20) having a conical shape along the anchoring element longitudinal axis (9), with a smaller cross-sectional surface of the demolding section (20) facing the anchoring element (8) and a larger cross-sectional surface of the demolding section (20) facing away from the anchoring element (8),
g. the demolding section (20) having a taper in relation to the anchoring element longitudinal axis (9) with an opening angle (n),
**characterized in that** n < 1°.

2. Fixing anchor according to claim 1, **characterized in that** the anchoring element (8) has an in particular self-tapping external thread (10) allowing the anchoring element (8) to be screwed into the porous material (2).

3. Fixing anchor according to any one of the preceding claims, **characterized by** a screw connection (14, 16) or a plug-in connection allowing the anchoring element (8) to be detachably connected to the mounting element (15).

4. Fixing anchor according to claim 3, **characterized in that** the screw connection (14, 16) has a first pitch (g₁) for detachably connecting the anchoring element (8) to the mounting element (15), said first pitch (g₁) being smaller than a second pitch (g₂) of a self-tapping external thread (10) of the anchoring element (8) to be screwed into the porous material (2), with in particular g₂/g₁ > 3, in particular g₂/g₁ > 6, and in particular g₂/g₁ > 9.

5. Fixing anchor according to any one of the preceding claims, **characterized by** an axial limiting device (17, 19) or an anti-rotation device allowing the anchoring element (8) to be connected to the mounting element (15) in a torque-transmitting manner.

6. Fixing anchor according to any one of the preceding claims, **characterized in that** the demolding section (20) has a smooth surface, in particular a sliding layer (24).

7. Fixing anchor according to any one of the preceding claims, **characterized in that** the mounting element (15) includes a fixing portion (12) to secure an object to the fixing anchor (25) and/or a torque application portion (23) allowing a torque to be applied to the fixing anchor (25).

8. Assembly comprising
a. a drill hole (3) arranged in a porous material (2),
b. an anchoring element (8) of a fixing anchor (25) according to any one of the preceding claims, the anchoring element (8) being anchored in the drill hole (3),
c. the anchoring element (8) being recessed in the drill hole (3) with a recess depth (t) different from zero.

9. Assembly according to claim 8, **characterized in that** the demolding section (20) of the mounting element (15), which is connectable to the anchoring element (8), has a length (1), which substantially corresponds to the recess depth (t), with in particular 1 = t.

10. Assembly according to any one of claims 8 to 9, **characterized in that** a torque application portion (23) of the mounting element (15) for applying a torque to the fixing anchor (25) protrudes from the drill hole opening (6) of the drill hole (3), the mounting element (15) comprising in particular a fixing portion (21) allowing an object to be secured to the fixing anchor (25), and the fixing portion (21) protruding from the drill hole opening (6) of the drill hole (3).

11. Method of placing a fixing anchor (25) according to any one of claims 1 to 7 in a drill hole (3) of a porous material (2), the method comprising the method steps of
- introducing a composite mixture (12) into a drill hole (3),
- inserting the fixing anchor (25) into the drill hole (3),
- arranging the fixing element (8) in the drill hole (3) with a recess depth (t) different from zero,
- connecting the anchoring element (8) with the porous material (2) surrounding the drill hole (3),
- loosening the mounting element (15) from the anchoring element (8),
- removing the mounting element (15) from the drill hole (3).

12. Method according to claim 11, **characterized by** an at least partial displacement of the composite mixture (12) towards the drill hole opening (6) counter to an insertion direction of the fixing anchor (25) as a result of the arrangement of the anchoring element (8) in the recess depth (t).

13. Method according to claim 11 or 12, **characterized in that** loosening the mounting element (15) is carried out by loosening a screw connection.

## Revendications

1. Ancrage de fixation destiné à être appliqué dans un trou foré (3) dans un matériau poreux, dans lequel l'ancrage de fixation (25) comprend
a. un élément d'ancrage (8) présentant un axe longitudinal d'élément d'ancrage (9) pour l'ancrage dans le matériau poreux (2),
b. un élément de montage (15) permettant le montage de l'élément d'ancrage (8) dans le matériau poreux (2),
c. dans lequel l'élément de montage (15) et l'élément d'ancrage (8) peuvent être reliés l'un à l'autre de manière à transmettre un couple par rapport à l'axe longitudinal d'élément d'ancrage (9),
d. dans lequel l'élément de montage (15) et l'élément d'ancrage (8) peuvent être reliés l'un à l'autre de manière détachable,
dans lequel l'élément de montage (15) présente une partie de démoulage (20) pour le démoulage de l'élément de montage (15) du matériau poreux (2),
f. la partie de démoulage (20) est conique le long de l'axe longitudinal d'élément d'ancrage (9), dans lequel une surface de section plus petite de la partie de démoulage (20) est tournée vers l'élément d'ancrage (8) et une surface de section plus grande de la partie de démoulage (20) est opposée à l'élément d'ancrage (8),
g. la partie de déformation (20) présente une conicité pourvue d'un angle d'ouverture (n) par rapport à l'axe longitudinal d'élément d'ancrage (9),
**caractérisé en ce que** : n < 1° s'applique.

2. Ancrage de fixation selon la revendication 1, **caractérisé en ce que** l'élément d'ancrage (8) présente un filet extérieur (10), en particulier auto-taraudeur, pour le vissage de l'élément d'ancrage (8) dans le matériau poreux (2).

3. Ancrage de fixation selon l'une quelconque des revendications précédentes, **caractérisé par** une liaison vissée (14, 16) ou une liaison enfichable pour la liaison libérable de l'élément d'ancrage (8) à l'élément de montage (15).

4. Ancrage de fixation selon la revendication 3, **caractérisé en ce que** la liaison filetée (14, 16), pour la liaison libérable de l'élément d'ancrage (8) à l'élément de montage (15), présente un premier pas de filetage (g₁) inférieur à un deuxième pas de filetage (g₂) d'un filet extérieur (10) auto-taraudeur de l'élément d'ancrage (8) pour le vissage dans le matériau poreux (2), dans lequel g₂/g₁ > 3 s'applique en particulier, g_{2/}g₁ > 6 s'applique en particulier et g₂/g₁ > 9 s'applique en particulier.

5. Ancrage de fixation selon l'une quelconque des revendications précédentes, **caractérisé par** une limitation axiale (17, 19) ou une sécurité anti-rotation pour la liaison de l'élément d'ancrage (8) et de l'élément de montage (15) de manière à transmettre un couple.

6. Ancrage de fixation selon l'une quelconque des revendications précédentes, **caractérisé en ce que** la partie de démoulage (20) présente une surface lisse, en particulier une surface de glissement (24).

7. Ancrage de fixation selon l'une quelconque des revendications précédentes, **caractérisé en ce que** l'élément de montage (15) présente une partie de fixation (21) pour la fixation d'un objet à l'ancrage de fixation (25) et/ou une partie d'application de couple (23) permettant l'application d'un couple sur l'ancrage de fixation (25).

8. Ensemble comprenant
a. un trou foré (3) ménagé dans un matériau poreux (2),
b. un élément d'ancrage (8), ancré dans le trou foré (3), d'un ancrage de fixation (25) selon l'une quelconque des revendications précédentes,
c. l'élément d'ancrage (8) étant enfoncé dans le trou foré (3) à une profondeur d'enfoncement (t) différente de zéro.

9. Ensemble selon la revendication 8, **caractérisé en ce que** la partie de démoulage (20) de l'élément de montage (15) pouvant être relié à l'élément d'ancrage (8) présente une longueur (l) qui correspond sensiblement à la profondeur d'enfoncement (t), dans lequel l = t s'applique en particulier.

10. Ensemble selon l'une quelconque des revendications 8 à 9, **caractérisé en ce qu'**une partie d'application de couple (23) de l'élément de montage (15), permettant d'appliquer un couple sur l'ancrage de fixation (25) au niveau de l'ouverture de trou foré (6), fait saillie du trou foré (3), dans lequel l'élément de montage (15) présente en particulier une partie de fixation (21) pour la fixation d'un objet à l'ancrage de fixation (25) et dans lequel la partie de fixation (21) au niveau de l'ouverture de trou foré (6) fait saillie du trou foré (3).

11. Procédé d'application d'un ancrage de fixation (25) selon l'une quelconque des revendications 1 à 7 dans un trou foré (3) d'un matériau poreux (2), comprenant les étapes de procédé
- l'introduction d'une matière composite (12) dans le trou foré (3),
- l'insertion de l'ancrage de fixation (25) dans le trou foré (3),
- l'agencement de l'élément d'ancrage (8) dans le trou foré (3) à une profondeur d'enfoncement (t) différente de zéro,
- la liaison de l'élément d'ancrage (8) au matériau poreux (2) entourant le trou foré (3),
- le détachement de l'élément de montage (15) de l'élément d'ancrage (8),
- le retrait de l'élément de montage (15) du trou foré (3).

12. Procédé selon la revendication 11,
**caractérisé par** un refoulement au moins en partie de la matière composite (12) à l'encontre d'une direction d'introduction de l'ancrage de fixation (25) en direction de l'ouverture de trou foré (6) par l'agencement de l'élément d'ancrage (8) dans la profondeur d'enfoncement (t).

13. Procédé selon la revendication 11 ou 12,
**caractérisé en ce que** le détachement de l'élément de montage (15) est réalisé par une libération d'une liaison vissée.
